# EUROPEAN PATENT APPLICATION

(11) **EP 0 655 476 A1**
(43) Date of publication of application: **31.05.1995**
(21) Application number: 94308206.5
(22) Date of filing: 08.11.1994
(51) Int. Cl.: C08J 5/24, B29B 15/10

(54) **Fibrous preforms containing cyclic polyester oligomers**

(30) Priority: 29.11.1993 US 158556
(71) Applicant: GENERAL ELECTRIC COMPANY, Schenectady, NY 12345 (US)
(72) Inventor: Carbone, John William, Schenectady, New York 12309 (US)
(74) Representative: Pratt, Richard Wilson

(57) **Abstract**

Fibrous preforms comprise at least one fibrous mat with its shape stabilized by a macrocyclic poly(alkylene dicarboxylate) oligomer composition substantially free from linear species and free from polymerization catalyst. Cyclic poly(1,4-butylene terephthalate) oligomer mixtures are preferred. The resulting preforms retain their shape and may be used in the formation of prepregs and resinous composites.

## Description

This invention relates to the preparation of shaped polymer composites, and more particularly to preforms for such composites.

A fibrous preform is a fibrous article, typically a mat, stably maintained in a specific contour convenient for consolidation into a finished composite article. The contour and thickness usually correspond to those desired in the finished article. Preferably, the preform is further characterized by a minimum of excess bulk and loose strands. It is often originally fabricated as a roll of material resembling fabric, which may be shaped, combined with resin or other impregnating material and consolidated in a press, autoclave or mold, after which the resin may be cured to form the finished composite article.

The preform should be easily handled without damage and should be structurally stable in typical environments. Other desirable criteria are low labor costs, rapid fabrication and minimization of waste.

One of the major problems in preform fabrication is assurance of proper placement and integrity of the fibrous reinforcement. Fillers employed in composites, such as glass or graphite fibers, are not drapable. That is, the fibers deform elastically and always return to their original shape when the deforming stress is removed. They also suffer from inadequate tack, i.e., adhesion between layers, as between woven and non-woven portions of a fiber mat. As a result, fiber lay-up can be a time-consuming and expensive process, and complex geometries of good integrity can be difficult or impossible to obtain.

Three techniques have generally been employed for the conversion of fibrous mats into shaped composite articles. One is to simply cut the mat to the appropriate shape and place it in the mold or other forming tool. This method is useful only for parts which are planar or very nearly so. A second technique is to employ such operations for mat fabrication and assembly as braiding, formation of a three-dimensional woven structure or stitching; such operations are applicable to only a limited range of structures and can be labor-intensive.

The third technique is the employment of a binder to maintain integrity of the preform, as disclosed, for example, in U.S. Patent 5,071,711. Materials useful as binders generally have at least limited adhesive properties. When applied to the mat, they hold the preform together during handling and enable it to maintain the desired shape prior to placing in the mold.

Many woven and non-woven mats are presently available with binders already applied. Application of binders to discontinuous fibers is typically achieved by collecting the fibers on a screen by vacuum action and spraying a solution or slurry of the binder thereupon. Application to continuous fibers may also be by an operation such as spraying.

The commercially applied binders are not, however, adaptable to all composite forming processes. For example, U.S. Patent 5,191,013 describes the formation of articles by the impregnation of fillers with macrocyclic poly(alkylene dicarboxylate) oligomers, followed by ring-opening polymerization of the cyclic oligomers. Such polymerization frequently takes place at temperatures of 200°C or higher, which cannot be survived by many commonly employed binder materials. In addition, the use of an inappropriate binder can cause deleterious reactions between the binder and the resinous material, resulting in alteration of the properties of one or both.

The present invention provides fibrous preforms which are capable of maintaining their shape and integrity during repeated fabrication and handling operations prior to molding, and which may be converted by a wide variety of processes into thermoplastic composite articles. Also provided is a method for imparting dimensional stability to fillers in the form of preforms.

In one of its aspects, therefore, the invention includes shapeable articles comprising at least one fiber mat impregnated with a shape stabilizing amount up to about 10% by weight, based on said mat, of at least one macrocyclic poly(alkylene dicarboxylate) oligomer composition substantially free from linear polyesters and free from catalysts for polymerization of said macrocyclic composition.

An important property of the articles of the present invention is that they are capable of being shaped. That is, any such article can be configured into a specific shape, which may be planar or more complex, either at room temperature or after heating. At one stage or another, it is usually the approximate shape desired in the finished composite article.

The fiber mats which may be employed in the invention may comprise any fibrous reinforcing material known in the art. Both chopped and continuous fibers, as well as combinations thereof, may be employed. Suitable materials include carbon, glass, highly oriented polyamide and boron. Carbon fibers and glass fibers are frequently preferred.

The reinforcing material may be in the form of a single layer or a plurality of layers. For the preparation of multilayer articles, the layers are typically stacked in a mold or equivalent shaping device under conditions enabling them to retain their shape.

The material providing dimensional stability according to the invention (hereinafter sometimes designated "binder") is at least one fused macrocyclic poly(alkylene dicarboxylate) (hereinafter sometimes simply "polyester") oligomer composition. The term "macrocyclic" as used herein denotes the presence of an overall ring structure, independent of any alicyclic, aromatic or heterocyclic rings present therein.

Both single compounds and mixtures of compounds may be employed. The macrocyclic compounds may be monomeric; i.e., may contain a single structural unit. More often, however, at least one macrocyclic oligomer and preferably a mixture of macrocyclic oligomers of various degrees of polymerization is employed. Such mixtures usually contain major proportions of oligomers having degrees of polymerization from 2 to about 12.

The macrocyclic polyester oligomers comprise structural units of the formula 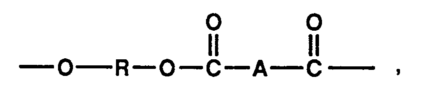
wherein R is an alkylene or mono- or polyoxyalkylene radical containing a straight chain of about 2-8 atoms and A is a m- or p-linked monocyclic aromatic or alicyclic radical. Such oligomers may be prepared as disclosed in U.S. Patents 5,039,783, 5,191,013 and 5,231,161. Preferably, R is ethylene or (especially) 1,4-butylene and A is m-phenylene or (especially) p-phenylene.

Thus, the preferred oligomers are poly(ethylene terephthalate) or poly(1,4-butylene terephthalate), or the analogous isophthalate, oligomers. Mixtures of these molecular species are included. Poly(1,4-butylene terephthalate) oligomers are especially preferred.

The macrocyclic polyester oligomers employed according to the present invention are substantially free from linear polyesters, including both linear oligomers and high molecular weight polyester. Linears, if present even in minor amount, undesirably increase the viscosity of the macrocyclic composition and correspondingly decrease the ease of handling said composition during preform formation. In general, linear species (including oligomers and high polymer) should not be present in amounts greater than about 2% by weight, and should preferably not exceed about 0.1%.

It is further required that the macrocyclic oligomer composition be free from catalysts for polymerization thereof; i.e., for conversion to linear polyester. This is true because the intended function of the oligomer composition in the preform is to stabilize it and facilitate handling, not to be converted to a linear polymer. As described hereinafter, such conversion may occur later, but if that is the case any catalyst required therefor should be added during later stages of processing rather than during the preparation and handling of the preform.

The articles of this invention may be prepared by methods which include conventional shaping operations. Shaping may be achieved at various stages of preform preparation and handling by rollers, in a mold or on a mandrel, with either prior or simultaneous application of the macrocyclic polyester composition. Said composition may be applied in either solid or liquid form; if it is applied as a solid, it should be fused by heating the preform.

Suitable application operations for solid compositions include sprinkling and pouring. For liquids, brushing, roller coating, dip coating, curtain coating, spraying or the like may be employed.

It is not necessary to impregnate the fibers with the binder. Surface application is usually sufficient, although some degree of permeation is also acceptable.

The binder is employed in a dimensionally stabilizing amount. That is, the article of the invention should contain only enough binder to render it dimensionally stable and to preserve its integrity. In no event is a proportion contemplated which is greater than about 10% by weight based on the mat, and up to about 5% is frequently sufficient.

Thus, formation of a prepreg is not contemplated. For a prepreg, pains are taken to consolidate the resin into a volume proportion corresponding to that desired in the finished article, with the exclusion or minimization of entrained air or other gases. Such consolidation is neither necessary nor particularly desirable in preform formation, since it will inherently occur during the final forming operation(s).

Following formation of the preform, it may be further processed by methods known to those skilled in the art. Thus, it may be consolidated in a press or autoclave if necessary, or stamped in a mold.

Conversion of the articles of this invention to prepregs or resinous composites by addition of more resin is contemplated. It may be achieved employing such operations as resin transfer molding. Any thermoplastic resin may be employed for this purpose, including further macrocyclic polyester in the presence of a catalyst for its conversion to linear polyester. Further shaping operations prior to molding may also be employed if necessary.

Another aspect of the invention is a method for stabilizing the shape of at least one fiber mat which comprises impregnating said fabric with a shape stabilizing amount up to about 10% by weight, based on said mat, of at least one macrocyclic polyester oligomer composition as described hereinabove.

The invention is illustrated by an example which employed a macrocyclic poly(1,4-butylene terephthalate) oligomer composition free from linears (including oligomers, which were removed by treatment with silica gel) and from catalyst, and having degrees of polymerization predominantly from 2 to about 12. A swatch of glass fiber fabric, 17.8 cm. square and weighing about 9.6 grams, was placed on an aluminum sheet and 390 mg. (4% by weight based on the mat) of macrocyclic oligomers was carefully and evenly distributed over one side. A second square of fabric was similarly prepared and placed on top of the first. The resulting assembly was placed in a nylon vacuum bag, sealed and compressed under vacuum, after which it was placed in a convection oven at 190°C. At this temperature, the macrocyclic oligomer composition had a viscosity of about 40 cps, sufficiently low to spread.

After 60 minutes, when the resin was judged to have melted and spread, the resulting preform was removed from the oven, cooled to room temperature under vacuum and removed from the bag. It exhibited good consolidation, being stiff enough to support its own weight and to survive repeated striking against a countertop.

## Claims

1. A shapeable article comprising at leat one fiber mat impregnated with a shape stabilizing amount up to about 10% by weight, based on said mat, of at least one macrocyclic poly(alkylene dicarboxylate) oligomer composition substantially free from linear polyesters and free from catalysts for polymerization of said macrocyclic composition.

2. An article according to Claim 1 wherein the fibers are carbon, glass, highly oriented polyamide or boron fibers.

3. An article according to Claim 2 wherein the fibers are glass fibers.

4. An article according to claim 1 or claim 2 wherein the macrocyclic oligomer composition is a mixture of oligomers.

5. An article according to any preceding claim wherein the proportion of linear species in the macrocyclic oligomer composition does not exceed about 0.1% by weight.

6. An article according to Claim 4 wherein the macrocyclic polyester oligomers are poly(ethylene terephthalate), poly(1,4-butylene terephthalate), poly(ethylene isophthalate) or poly(1,4-butylene isophthalate) oligomers or mixtures thereof.

7. An article according to Claim 6 wherein the macrocyclic oligomers are poly(1,4-butylene terephthalate) oligomers.

8. An article according to any preceding claim wherein the proportion of macrocyclic oligomer composition is up to about 5% by weight, based on said mat.

9. A method for stabilizing the shape of at least one fiber mat which comprises impregnating said fabric with a shape stabilizing amount up to about 10% by weight, based on said mat, of at least one macrocyclic poly(alkylene dicarboxylate) oligomer composition substantially free from linear polyesters and free from catalysts for polymerization of said macrocyclic composition.

10. A method according to Claim 9 wherein the fibers are carbon, glass, highly oriented polyamide or boron fibers.

11. A method according to Claim 10 wherein the fibers are glass fibers.

12. A method according to any of claims 9 to 11 wherein the macrocyclic oligomer composition is a mixture of oligomers.

13. A method according to any of claims 9 to 12 wherein the proportion of linear species in the macrocyclic oligomer composition does not exceed about 0.1% by weight.

14. A method according to Claim 12 wherein the macrocyclic polyester oligomers are poly(ethylene terephthalate), poly(1,4-butylene terephthalate), poly(ethylene isophthalate) or poly(1,4-butylene isophthalate) oligomers or mixtures thereof.

15. A method according to Claim 14 wherein the macrocyclic oligomers are poly(1,4-butylene terephthalate) oligomers.

16. A method according to any of claims 9 to 15 wherein the proportion of macrocyclic oligomer composition is up to about 5% by weight, based on said mat.
